Europäisches Patentamt

European Patent Office

Office européen des brevets

(19)

(11) Veröffentlichungsnummer: **0 189 513**
**B1**

(12) # EUROPÄISCHE PATENTSCHRIFT

(45) Veröffentlichungstag der Patentschrifft:
17.01.90

(21) Anmeldenummer: 85106092.1

(22) Anmeldetag: 17.05.85

(51) Int. Cl. ⁴: **F 16 J 15/32**

(54) **Dicht- oder Abstreifring.**

(30) Priorität: 31.01.85 DE 3503140

(43) Veröffentlichungstag der Anmeldung:
06.08.86 Patentblatt 86/32

(45) Bekanntmachung des Hinweises auf die Patenterteilung:
17.01.90 Patentblatt 90/03

(84) Bennante Vertragsstaaten:
AT BE DE FR GB IT NL SE

(56) Entgegenhaltungen:
DE-A-1 952 450
US-A-3 989 259

(73) Patentinhaber: Firma Carl Freudenberg
Höhnerweg 4
D-6940 Weinheim/Bergstrasse (DE)

(72) Erfinder: Wachowitz, Waldemar
Riikestrasse 8
D-6940 Weinheim (DE)

(74) Vertreter: Weissenfeld-Richters, Helga, Dr.
Höhnerweg 2
D-6940 Weinheim/Bergstrasse (DE)

## Beschreibung

Die Erfindung betrifft einen unter elastischer Vorspannung montierbaren Dicht- oder Abstreifring, umfassend einen unnachgiebigen Versteifungsring mit einer darauf festgelegten Beschichtung aus flüssigkeitsundurchlässigem Werkstoff, bei dem die Beschichtung mit radial nach außen vorspringenden Rippen versehen ist.

Auf einen Dichtring der vorgenannten Art nimmt beispielsweise die DE-A-2 709 394 Bezug. Die aus der Beschichtung des Versteifungsringes herausgeformten Rippen sind sinusförmig profiliert und haben einen sich in Umfangsrichtung erstreckenden Verlauf. Sie erfahren dadurch während des axialen Einpressens eines solchen Dichtringes in die aufnehmende Gehäusebohrung eine erhebliche, rückwärts gerichtete Abbiegung. Die Rippen bestehen aus dem elastischen Material der Beschichtung und sie haben daher das Bestreben, diese rückwärts gerichtete Abbiegung selbsttätig wieder auszugleichen. Ein solcher Ausgleich ist nur durch eine rückwärtige Relativverlagerung des montierten Dichtringes möglich und erfolgt zumeist nicht unmittelbar nach der Montage sondern erst während der späteren Benutzung. Die unter Verwendung entsprechend ausgebildeter Dicht- oder Abstreifringe erzielten Abdichtungsergebnisse können hierdurch eine erhebliche Beeinträchtigung erfahren.

Der Erfindung liegt die Aufgabe zugrunde, einen Dicht- oder Abstreifring der vorgenannten Art derart weiterzuentwickeln, daß bei Gewährleistung eines guten Abdichtungsergebnisses axiale Verlagerungen im Anschluß an die Montage weitgehend ausgeschlossen sind.

Diese Aufgabe wird erfindungsgemäß bei einem Dicht- oder Abstreifring der eingangs genannten Art dadurch gelöst, daß eine sich an die Rippen anschließende Verdickung vorgesehen ist, daß die Verdickung ein sich in Umfangsrichtung erstreckendes, geschlossenes Band bildet, wodurch die geforderte Abdichtung gewährleistet ist und daß die Gesamtfläche der Rippen drei- bis fünfmal so groß wie die des Bandes ist, wodurch die Forderung nach axialer Stabilität erfüllt ist.

Die Rippen haben bei dem erfindungsgemäß vorgeschlagenen Dicht- oder Abstreifring ebenso wie bei der Ausführung nach dem Stande der Technik im uneingebauten Zustand eine größere radiale Erstreckung als die aufnehmende Gehäusebohrung. Sie liegen dadurch unter einer elastischen Vorspannung an dieser an, was der fertig montierten Dichtung einen guten Sitz verleiht. Die montagebedingte Materialverdrängung aus dem Bereich der Rippen erfolgt bei der erfindungsgemäß vorgeschlagenen Ausführung jedoch nicht in axialer Richtung, wie bei der eingangs behandelten Ausführung, sondern in Umfangsrichtung. Das Bestreben der verformten Rippen, die ursprüngliche Gestalt zurückzuerlangen, kann daher bei der erfindungsgemäß vorgeschlagenen Ausführung nicht mehr zu einer axialen Verschiebung führen. Dennoch wird ein ausgezeichnetes Abdichtungsergebnis erzielt durch die sich auf der druckabgewandten Seite an die Rippen anschließende Verdickung der Beschichtung. Diese hat nur eine sehr geringe axiale Erstreckung und umschließt den Dicht- oder Abstreifring als ein in sich geschlossenes Band, welches unter einer elastischen Vorspannung an dem relativ ruhenden Maschinenteil anliegt. Dieser Bereich erfährt während der Montage der vorgeschlagenen Dichtung eine rückwärts gerichtete Abbiegung, die derjenigen der Rippen nach der eingangs beschriebenen Ausführung ähnlich ist. Im Gegensatz zu den dort vorhandenen Verhältnissen kann diese Abbiegung bei der erfindungsgemäß vorgeschlagenen Ausführung jedoch nachträglich nicht mehr zu einer axialen Relativverlagerung des montierten Dichtringes führen, weil die Größe der entsprechend verformten Fläche um das Drei- bis Fünffache kleiner ist als die Gesamtfläche der mit der aufnehmenden Gehäusebohrung in dichtendem Kontakt befindlichen Rippen.

Die dem Dichtring während der Montage verliehene axiale Position bleibt daher auch nach der Montage weitestgehend erhalten.

In Fällen, in denen das Verhältnis aus der Oberfläche der Rippen und der Oberfläche des zuletzt angesprochenen Dichtbandes weniger als 3 beträgt, ist die erwünschte axiale Festlegung der Dichtung häufig nicht mehr mit der gewünschten Präzision gewährleistet. Die statische Abdichtwirkung kann demgegenüber beeinträchtigt werden, wenn das angesprochene Verhältnis auf Werte von mehr als 5 ansteigt.

Die Rippen sind zweckmäßigerweise durch sich im wesentlichen in radialer Richtung erstreckende Flächen seitlich begrenzt. Eine gedachte Verlängerung dieser Flächen würde sich somit durch die Rotationsachse der abgedichteten Welle oder Stange erstrecken. Die Verformungen entsprechender Rippen werden durch diese Maßnahme in einen Bereich verlagert, der einen radialen Abstand von der aufnehmenden Gehäusebohrung aufweist.

Nach einer anderen vorteilhaften Ausgestaltung ist es vorgesehen, daß die Rippen durch Nuten getrennt sind, deren Breite in Umfangsrichtung 0,4 bis 0,6 mal so groß ist wie die Breite der Rippen. Eine zweckmäßige Breite der Rippen beträgt etwa 1,5 bis 2,5 mm. Innerhalb des genannten Bereiches ist sowohl eine gute axiale Festlegung als auch eine gute Abdichtung des vorgeschlagenen Dicht- oder Abstreifringes gewährleistet.

Eine beispielhafte Ausführung des erfindungsgemäß vorgeschlagenen Dicht- oder Abstreifringes ist in der in der Anlage beigefügten Zeichnung dargestellt. Sie wird nachfolgend näher erläutert:

Der in halbgeschnittener Darstellung wiedergegebene Dicht oder Abstreifring ist für die Abdichtung einer sich drehenden Welle mit einem Außendurchmesser von 52 mm bestimmt. Er ist in seinem äußeren Bereich durch einen anvul-

kanisierten Versteifungsring 4 von winkelförmigem Profil versteift. Der Versteifungsring 4 besteht aus Stahlblech und hat eine Wandstärke von 1,5 mm.

Der Versteifungsring 4 ist allseitig von dem gummielastischen Werkstoff des Dichtringes umhüllt. Er weist auf dem sich in axialer Richtung erstreckenden Schenkel seines Profils in Richtung des abgedichteten Raumes vorspringende Rippen 2 auf, die auf der druckabgewandten Seite in ein kontinuierliches Dichtband 3 übergehen. Die Rippen haben bei einer Breite in Umfangsrichtung von 4 mm einen gegenseitigen Abstand von 2 mm. Ihre axiale Länge beträgt 4 mm, die axiale Länge des Dichtbandes etwa 2 mm.

Zur Montage wird der vorgeschlagene Dichtring in eine aufnehmende Gehäusebohrung eingepreßt und zeigt anschließend keinerlei Neigung, aus der Bohrung zurückzuwandern. Die statische Abdichtwirkung ist von ausgezeichneter Güte.

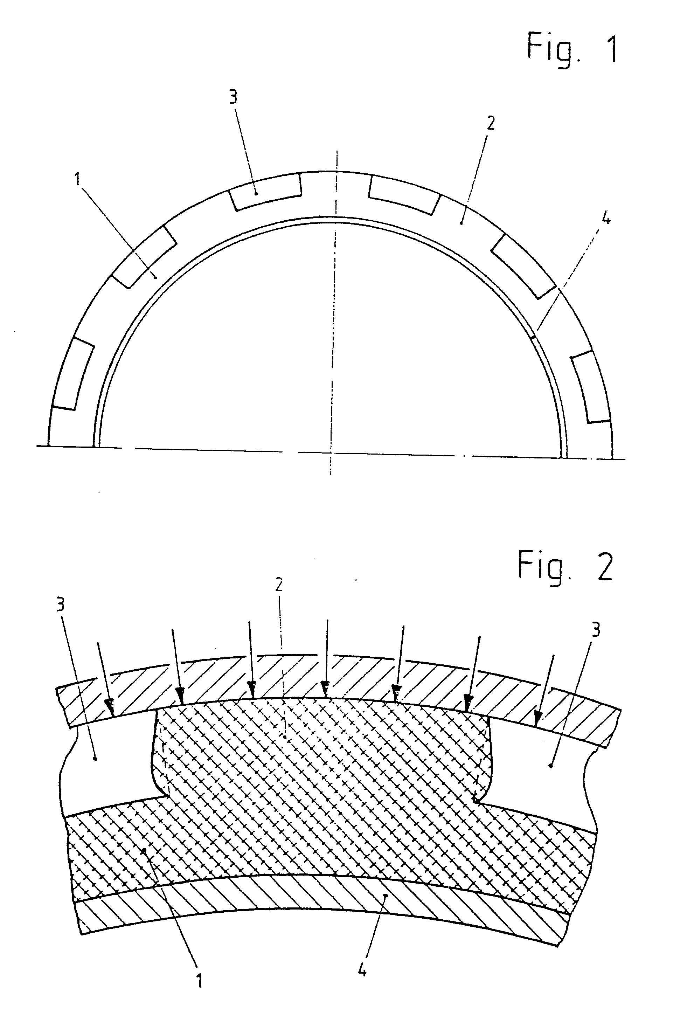

## Patentansprüche

1. Unter elastischer Vorspannung montierbarer Dicht- oder Abstreifring, umfassend einen unnachgiebigen Versteifungsring (4) mit einer darauf festgelegten Beschichtung (1) aus flüssigkeitsundurchlässigem Werkstoff, bei dem die Beschichtung (1) mit radial nach außen vorspringenden Rippen (2) versehen ist, dadurch gekennzeichnet, daß eine sich an die Rippen (2) anschließende Verdickung (3) der Beschichtung (1) vorgesehen ist, daß die Verdickung (3) ein sich in Umfangsrichtung erstreckendes, geschlossenes Dichtband (3) bildet, wodurch die geforderte Abdichtung gewährleistet ist und daß die Gesamtfläche der Rippen (2) drei- bis fünfmal so groß wie die des Dichtbandes ist, wodurch die Forderung nach axialer Stabilität erfüllt ist.

2. Dicht- oder Abstreifring nach Anspruch 1, dadurch gekennzeichnet, daß die Rippen durch sich im wesentlichen in radialer Richtung erstreckende Flächen seitlich begrenzt sind.

3. Dicht- oder Abstreifring nach Anspruch 1 bis 2, dadurch gekennzeichnet, daß die Rippen durch Nuten getrennt sind, deren Breite in Umfangsrichtung 0,4 bis 0,6 mal so groß ist wie die Breite der Rippen.

## Claims

1. An oil seal or scraper ring which can be mounted under resilient prestress and which comprises a rigid stiffening ring (4) having a permanent coating (1) made of fluid-impermeable material, in which the coating (1) is provided with ribs (2) projecting radially outwards, characterized in that a thickening (3) of the coating (1) is provided adjacent to the ribs (2), in that the thickening (3) forms a closed sealing band (3) extending in circumferential direction, by means of which the required sealing is ensured and in that the overall surface of the ribs (2) is three to five times as large as that of the sealing band, by means of which the requirement for axial stability is fulfilled.

2. An oil seal or scraper ring according to claim 1, characterized in that the ribs are bounded laterally by surfaces extending essentially in radial direction.

3. An oil seal or scraper ring according to either of claims 1 or 2, characterized in that the ribs are separated by grooves, the width of which in circumferential direction, is 0.4 to 0.6 times as large as the width of the ribs.

## Revendications

1. Bague d'étanchéité ou de raclage pouvant être montée sous précontrainte élastique, comprenant une bague de renfort (4) rigide sur laquelle est appliqué un revêtement (1) en matériau imperméable aux liquides, ce revêtement (1) étant pourvu de nervures (2) faisant saillie radialement vers l'extérieur, caractérisée en ce qu'il est prévu une sur-épaisseur (3) du revêtement (1) se raccordant aux nervures (2), que la sur-épaisseur (3) forme une bande d'étanchéité (3) fermée et s'étendant en direction de la périphérie de manière à assurer l'étanchéité requise, et que la surface totale des nervures (2) est trois à cinq fois plus grande que celle de la bande d'étanchéité, si bien que les exigences de stabilité axiale se trouvent satisfaites.

2. Bague d'étanchéité ou de raclage selon la revendication 1, caractérisée en ce que les nervures sont limitées latéralement par des surfaces s'étendant essentiellement en direction radiale.

3. Bague d'étanchéité ou de raclage selon les revendications 1 et 2, caractérisée en ce que les nervures sont séparées par des rainures dont la largeur, en direction de la périphérie, est égale à 0,4 à 0,6 fois celle des nervures.

Fig. 1

Fig. 2